# EUROPÄISCHE PATENTANMELDUNG

(11) **EP 4 530 231 A1**
(43) Veröffentlichungstag der Anmeldung: **02.04.2025**
(21) Anmeldenummer: 24203076.5
(22) Anmeldetag: 27.09.2024
(51) Int. Cl.: B65G 29/00, B65G 47/84

(54) **VORRICHTUNG ZUM FÜHREN VON BEHÄLTERN UND STERNRADFÖRDERER**

(30) Priorität: 27.09.2023 DE 102023126252
(71) Anmelder: KRONES AG, 93073 Neutraubling (DE)
(72) Erfinder: Stoeckl, Fabian, 93073 Neutraubling (DE); Mohr, Daniel, 93073 Neutraubling (DE); Schoenfelder, Markus, 93073 Neutraubling (DE); Ehrismann, Tobias, 93073 Neutraubling (DE); Landler, Bruno, 93073 Neutraubling (DE)
(74) Vertreter: Nordmeyer, Philipp Werner

(57) **Zusammenfassung**

Die vorliegende Erfindung betrifft eine Vorrichtung (1) zur Führung von durch ein Sternrad (103) in einem Sternradförderer (100) geförderten Behältern (101), bevorzugt zum Führen von Getränkebehältern (101) in einem Sternradförderer (100) in einer Getränkeabfüllanlage, umfassend mindestens zwei von bezogen auf eine zentrale Achse (200) in einer Umfangsrichtung (210) beabstandet voneinander angeordneten, bezogen auf die zentrale Achse (200) jeweils in radialer Richtung (220) verschiebbaren Einstellteilen (16), und ein in Umfangsrichtung (210) verschiebbares Steuersegment (18), welches derart mit den Einstellteilen (16) gekoppelt ist, dass ein Verschieben des Steuersegments (18) in Umfangsrichtung (210) ein Verschieben der Einstellteile (16) in radialer Richtung (220) bewirkt, wobei am radial inneren Ende der Einstellteile (16) je ein Führungsleistensegment (4) angeordnet ist, wobei die Führungsleistensegmente (4) gemeinsam eine segmentierte Führungsleiste (6) zum Bereitstellen einer Außenführungsbahn für die zu fördernden Behälter (101) ausbilden.

## Beschreibung

### Technisches Gebiet

Die vorliegende Erfindung betrifft eine Vorrichtung zum Führen von durch ein Sternrad in einem Sternradförderer geförderten Behältern, beispielsweise zum Führen von Getränkebehältern in einem Sternradförderer in einer Getränkeabfüllanlage, sowie einen Sternradförderer zum Fördern von Behältern, beispielsweise zum Fördern von Getränkebehältern in einer Getränkeabfüllanlage.

### Stand der Technik

In Getränkeabfüllanlagen werden Sternradförderer üblicherweise auf automatisierten Bearbeitungslinien eingesetzt, beispielsweise am Ende einer Produktionslinie, um befüllte und verschlossene Behälter mit einer vorgegebenen Taktung zu vereinzeln.

Um die Taktung, also die Frequenz der Weitergabe der Behälter beziehungsweise den Abstand zweier aufeinanderfolgender Behälter, vorgeben zu können, umfassen Sternradförderer eine Mehrzahl von an einem Förderrad über den Umfang gleichmäßig verteilt angeordneter Behälteraufnahmen, in welchen die zu fördernden Behälter während des Förderns durch den Sternradförderer aufgenommen sind.

Hierbei sind grundsätzlich zwei grundlegend verschiedene Arten von Sternradförderern hinsichtlich der Beschaffenheit ihrer Behälteraufnahmen zu unterscheiden, nämlich einerseits umfassend Behälteraufnahmen in Form von Klammern und andererseits in Form von Taschen.

Die erste Art von Sternradförderern weisen Behälteraufnahmen auf, welche als aktive oder passive Klammern ausgebildet sein können. Diese Klammern greifen den zu fördernden Behälter, indem im Förderbetrieb des Sternradförderers, also während der Förderung zu fördernder Behälter, bei der Übernahme des Behälters und der Übergabe des Behälters zwei zueinander schwenkbare Klammerarme zwischen einer geöffneten Position und einer geschlossenen Position aktiv oder passiv verschwenkt werden. Die geöffnete Position erlaubt ein Einbringen des zu haltenden Behälters in die Klammer und entsprechend ein Herausnehmen des Behälters aus der Klammer. In der geschlossenen Position fixiert die Klammer den Behälter in einer vorgegebenen Position in der Klammer, so dass ein Fördern möglich ist. Der Behälter ist hierbei durch die das Greifen via der Klammer am Sternradförderer in Position gehalten. Der Übergang zwischen geöffneter Position und geschlossener Position der Klammerarme erfolgt entweder aktiv, also angesteuert durch eine entsprechende Steuerungsvorrichtung, oder passiv, indem der Behälter gegen eine Vorspannung der Klammerarme in die Klammer geschoben wird. Entsprechend erfährt eine Klammer während des Förderbetriebs des Sternradförderers bei der Übernahme des zu fördernden Behälters von einer in Förderrichtung des Behälters in der Anlage dem Sternradförderer vorgelagerten Vorrichtung in die Klammer und auch bei der Übergabe des durch den Sternradförderer geförderten Behälter aus der Klammer an eine dem Sternradförderer nachgelagerte Vorrichtung jeweils eine Änderung der Stellung ihrer Klammerarme, bei der Übernahme zumindest von der geöffneten Position in die geschlossene, und bei der Übergabe von der geschlossenen Position in die geöffnete Position.

Ein derartiger Förderer, der mit Klammern zum Greifen eines Behälters ausgebildet ist, ist beispielsweise der EP 2 093 169 A1 zu entnehmen. Diese Offenbarung beschäftigt sich insbesondere mit der zweiten Gruppe von Sternradförderern, welche keine Klammern, sondern Taschen umfassen. "Taschen" sind hier als Behälteraufnahmen zu verstehen, die im Gegensatz zu den zuvor beschriebenen Klammern während des Förderbetriebs des Sternradförderers keine Bewegung zwischen verschiedenen Positionen erfahren. Im Gegenteil sind die Taschen in einem Rüstvorgang voreingestellt und verbleiben im eigentlichen Betrieb des Sternradförderers und der letzteren umfassenden Abfüllanlage in einer starren, fixen Position. Die Taschen stellen also einen während des Förderbetriebs gleichbleibenden Aufnahmeraum bereit, in welchen ein Behälter zum Fördern zumindest teilweise aufgenommen ist, ohne dabei durch Positionsveränderungen von Klammerarmen gegriffen zu werden, wie dies bei Klammern der Fall ist.

Um ein Fördern eines Behälters in Förderrichtung zu ermöglichen, umfasst die Tasche einen in Förderrichtung betrachtet rückwärtigen Taschenarm, welcher bei einer Drehung in Förderrichtung des die Tasche umfassenden Förderrades den zu fördernden Behälter in Förderrichtung gesehen von hinten schiebt. Der Behälter wird, etwaige in Zusammenwirken mit einer in Bezug auf die Drehachse des Förderrades radial außenseitig vorgesehene Führung, entweder über eine starre Bodenplatte des Sternradförderers geschoben oder der Sternradförderer umfasst eine mitdrehende Bodenplatte, auf welcher der geförderte Behälter mit seinem Behälterboden steht. Zur in Förderrichtung gesehenen vorderseitigen Beschränkung der Tasche kann die Tasche einen weiteren Taschenarm umfassen.

Verbreitet sind Sternradförderer mit in Wesentlichen scheibenförmigem Förderrad mit einer Vielzahl von am Umfang vorgesehenen Taschen, die gleichmäßig voneinander beabstandet sind. Das Förderrad derartiger Sternradförderer umfasst typischerweise zumindest ein Paar scheibenartiger Platten, die in einem Umrüstmodus um eine zentrale Drehachse des Förderrades relativ zueinander verdrehbar sind. An den Platten sind starre, nach radial außen gerichtet Vorsprünge angeordnet, die jeweils einen Taschenarm einer Tasche ausbilden. Die Vorsprünge der einen Platte bilden hierbei stets den Taschenarm auf einer Seite jeder Tasche aus, beispielsweise stets den rückwärtigen Taschenarm, und die Vorsprünge der anderen Platte bilden dann stets den Taschenarm auf der anderen Seite jeder Tasche aus, beispielsweise entsprechend stets den vorderseitigen Taschenarm. Durch Verdrehen der Platten zueinander kann eine Breite der Taschen im Umrüstmodus voreingestellt werden. Eine derartige Vorrichtung kann der EP 3 152 138 B1 entnommen werden.

Ferner ist aus der WO 2005/030616 A2 eine Vorrichtung bekannt, bei welcher Taschenarme über Zahnradgetriebe schwenkbar an einem Paar von Scheiben eines Förderrades angeordnet sind.

Um zu verhindern, dass die in den Taschen geförderten Behälter sich während des Förderns aus den Taschen bewegen, ist in der Regel gegenüber den Taschen eine Vorrichtung zum Führen von Behältern an einer Außenseite eines Sternradförderers, auch als Behälteraußenführung bezeichnet, angeordnet, die eine bezogen auf die Drehachse des die Taschen umfassenden Rundläuferförderers auf einen vorgegebenen Teilkreis angeordnete, kreisbogenförmige Führungsschiene umfasst. Hierbei sind Vorrichtungen bekannt, bei welchem der Abstand der Führungsschiene zur Drehachse verändert werden kann. Eine derartige Vorrichtung kann beispielsweise der US 8,418,836 B2 entnommen werden. Bei dieser kann eine flexible Führungsschiene verformt werden, um mehr oder weniger eine annähernde Kreisbogenform bei verschiedenen Radien der Führungsschiene zur Drehachse bereitstellen zu können.

### Darstellung der Erfindung

Ausgehend von dem bekannten Stand der Technik ist es eine Aufgabe der vorliegenden Erfindung, eine verbesserte Vorrichtung zum Führen von durch ein Sternrad in einem Sternradförderer geförderten Behältern, bevorzugt zum Führen von Getränkebehältern in einem Sternradförderer in einer Getränkeabfüllanlage, sowie einen verbesserten Sternradförderer bereitzustellen.

Die Aufgabe wird durch eine Vorrichtung zum Führen von durch ein Sternrad in einem Sternradförderer geförderten Behältern, bevorzugt zum Führen von Getränkebehältern in einem Sternradförderer in einer Getränkeabfüllanlage mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Führen von durch ein Sternrad in einem Sternradförderer geförderten Behältern an einer radial äußeren Seite bezogen auf das Sternrad, bevorzugt zum Führen von Getränkebehältern in einem Sternradförderer in einer Getränkeabfüllanlage, vorgeschlagen, umfassend eine Mehrzahl von bezogen auf eine zentrale Achse in einer Umfangsrichtung beabstandet voneinander angeordneten, bezogen auf die zentrale Achse jeweils in radialer Richtung verschiebbaren Einstellteilen, und ein in Umfangsrichtung verschiebbares Steuersegment, welches derart mit den Einstellteilen gekoppelt ist, dass ein Verschieben des Steuersegments in Umfangsrichtung ein Verschieben der Einstellteile in radialer Richtung bewirkt.

Am radial inneren Ende der Einstellteile ist je ein Führungsleistensegment angeordnet, wobei die Führungsleistensegmente zusammen eine segmentierte Führungsleiste zum Bereitstellen einer Führungsbahn für zu fördernde Behälter ausbilden.

Dadurch kann die Führungsleiste auf verschiedenen Radien beziehungsweise Teilkreisdurchmessern relativ zu einer zentralen Drehachse des Sternradförderers angeordnet werden, ohne dass die Führungsleiste beziehungsweise deren Führungsleistensegmente zwingend elastisch oder gar plastisch verformt werden müssten. Entsprechend sind auch in der Vorrichtung keine Kräfte und Spannungen aufzunehmen, die aufgrund einer elastischen Verformung der Führungsleiste vorliegende Rückstellkräfte kompensieren. Entsprechend können auch die zur Verstellung der Positionen der Führungsleistensegmente erforderlichen Kräfte in Vergleich zu herkömmlichen Vorrichtungen aus dem Stand der Technik gering sein. Die vorgeschlagene Vorrichtung kann mithin kompakt und mit vergleichsweise geringem Materialeinsatz ausgebildet sein, einen einfachen Aufbau aufweisen und über eine vergleichsweise große Lebensdauer hinweg eingesetzt werden, ohne dass es zu Schäden an Teilen der Vorrichtungen kommt.

Die zentrale Achse kann die zentrale Drehachse eines eine Mehrzahl von Taschen zum Aufnehmen eines Behälters umfassenden Sternrads eines Sternradförderers sein.

Die segmentierte Führungsleiste kann zumindest teilweise im Wesentlichen bogenförmig, optional kreisbogenförmig ausgebildet sein. Anders ausgedrückt können die Führungsleistensegmente derart relativ zueinander angeordnet sein, dass die segmentierte Führungsleiste im Wesentlichen eine bogenartige Form aufweist, welche im Wesentlichen zu der durch das die Taschen umfassende Sternrad des Sternradförderers vorgegebenen Bewegungsbahn der geförderten und durch die Vorrichtung geführten Behältern korrespondiert.

Unter dem Begriff "im Wesentlichen bogenförmig" ist zu verstehen, dass die einzelnen Führungsleistensegmente, spezifischer eine Führungsfläche der einzelnen Führungsleistensegmente, einen festen Krümmungsradius aufweisen können, der von der Krümmung der Bogenform, auch welcher sich die segmentierte Führungsleiste erstreckt, unterschiedlich ist. Dennoch kann die segmentierte Führungsleiste für die zu befördernden Behälter eine Führungsbahn bereitstellen, welche bezogen auf einen Radius der Führungsbahn bezogen auf die zentrale Achse lediglich vernachlässigbar kleine Unebenheiten im Verlauf aufweist.

Die Führungsleiste kann eine zusammenhängende segmentiere Führungsleiste sein. Mit anderen Worten kann zwischen benachbarten Führungsleistensegmenten kein Spalt beziehungsweise kein Abstand in Umfangsrichtung bezogen auf die zentrale Achse, also längs der durch die segmentiere Führungsleiste bereitgestellten Führungsbahn vorliegen.

Gemäß einer Ausführungsform können sich benachbarte Führungsleistensegmente in Umfangsrichtung überlappen. So kann beispielsweise sichergestellt werden, dass die segmentierte Führungsleiste zusammenhängend ist, also keine Abstände zwischen benachbarten Führungsleistensegmenten vorliegt. Zudem können die überlappenden Teile benachbarter Führungsleistensegmente zur Kopplung dieser Führungsleistensegmente verwendet werden.

Gemäß einer Ausführungsform kann durch Verschieben der Einstellteile die segmentierte Führungsleiste bezogen auf die zentrale Achse zwischen einer vorgegebenen radial inneren Position und einer vorgegebenen radial äußeren Position bewegbar sein.

In der radial inneren Position kann die segmentierte Führungsleiste im Wesentlichen auf einem inneren Radius in Bezug auf die zentrale Achse angeordnet sein, und in der radial äußeren Position kann die segmentierte Führungsleiste im Wesentlichen auf einem äußeren Radius, der größer ist als der innere Radius, angeordnet sein.

Um ein stabiles Führen der Behälter entlang der durch die segmentierte Führungsleiste bereitzustellen Führungsbahn zu ermöglichen, können die Führungsleistensegmente an ihrem zugehörigen Einstellteil zumindest um eine durch die radiale Richtung definierte Achse drehfest angeordnet sein.

Alternativ oder zusätzlich können die Führungsleistensegmente zumindest in Umfangsrichtung bezogen auf die zentrale Achse verschiebefest angeordnet sein.

Unter dem Begriff "drehfest" ist hier zu verstehen, dass ein Bauteil gegenüber dem Teil, an welchem es angeordnet ist, gegen ein Verdrehen gesichert ist. Das Bauteil kann also nicht relativ zu dem Teil, an dem es "drehfest" befestigt ist, drehen. Ist die "Drehfestigkeit" bezogen auf eine bestimmte geometrische Achse angegeben, so ist das in Rede stehende Bauteil zumindest in Bezug auf diese Achse nicht drehbar. Ist keine Achse explizit angegeben, also fehlte die Angabe einer bestimmten Achse, so ist das Teil generell als drehfest anzusehen. Es ist dann also gar keine Drehbewegung des Bauteils relativ zu dem Teil, an welchem es "drehfest" befestigt ist, möglich. Es weist gegenüber diesem also keinen rotatorischen Freiheitsgrad auf.

Analog ist unter "verschiebefest" zu verstehen, dass ein Bauteil gegenüber einem weiteren Teil gegen ein Verschieben fixiert ist, also keinen translatorischen Freiheitsgrad aufweist.

Eine Anordnung eines Bauteils, die als "verschiebefest und drehfest" beschrieben ist, entspricht mithin einer starren Befestigung ohne jegliche Freiheitsgrade.

Gemäß einer Ausführungsform können die Führungsleistensegmente relativ zueinander verschiebbar ausgebildet sein, beispielsweise zumindest in Umfangsrichtung. Es hat sich hierbei als vorteilhaft herausgestellt, wenn optional bei einem Verschieben der Einstellteile in radialer Richtung die Führungsleistensegmente unter anderem relativ zueinander eine Verschiebung in einer Richtung parallel zur Umfangsrichtung erfahren.

Gemäß einer Ausführungsform können zumindest zwei in Umfangsrichtung benachbarte Führungsleistensegmente miteinander gekoppelt sein, beispielsweise verschiebbar gekoppelt. Sie können beispielsweise in Umfangsrichtung verschiebbar gekoppelt sein. Die Kopplung kann derart ausgestaltet sein, dass ein an einem der gekoppelten Führungsleistensegmente angeordnetes Federelement, beispielsweise ausgebildet als Führungsstift, mit einem am anderen der gekoppelten Führungsleistensegmente angeordneten, sich beispielsweise in einer Verschieberichtung, beispielsweise der Umfangsrichtung, erstreckenden Nutelement, das zum Beispiel als Langlochnut ausgebildet sein kann, in Eingriff steht. Insbesondere, wenn vorgesehen ist, dass mehrere oder gar alle Führungsleistensegmente je mit ihren benachbarten Führungsleistensegmenten gekoppelt sind, kann jedes Führungsleistensegment auf einer ersten Seite in Umfangsrichtung bezogen auf die zentrale Achse ein Federelement aufweisen und auf der anderen Seite ein Nutelement aufweisen. Zum einen können so alle Führungsleistensegmente gleich aufgebaut sein. Zum anderen können so alle Führungsleistensegmente mit ihren in Umfangsrichtung vorliegenden Nachbarn gekoppelt sein.

Gemäß einer Ausführungsform können die Führungsleistensegmente an ihrer radial inneren Seite eine vorgegebene Krümmung aufweisen. Ein Krümmungsradius der radial inneren Seite kann hierbei dem oben als "zweiten Radius" bezeichneten Radius der radial äußeren Position entsprechen. Alternativ kann der Krümmungsradius auch einem anderen Radius entsprechen, etwa jenem der radial inneren Position oder dem Radius einer Position zwischen der radial inneren Position und der radial äußeren Position, beispielsweise einer zu dieser mittigen radialen Mittelposition.

Gemäß einer Ausführungsform können die Einstellteile je an einem am Steuersegment angeordneten Führungselement geführt sein. Das Führungselement kann hierbei eine Führungskurve bereitstellen zwischen einem bezogen auf die zentrale Achse auf einem ersten Radius gelegenen ersten Punkt und einem auf einem zweiten Radius kleiner dem ersten Radius gelegenen, vom ersten Punkt in Umfangsrichtung versetzt angeordneten zweiten Punkt. Optional kann das Führungselement eine Passfeder oder eine Führungsnut umfassen oder als diese ausgebildet sein.

Gemäß einer Ausführungsform kann die Passfeder des Führungselements eine senkrecht zur Führungskurve vorliegende Breite umfassen, die vom ersten Punkt zum zweiten Punkt zunimmt. Die Passfeder kann beispielsweise ausgebildet sein, dass die Grundseiten des Trapezes am ersten Punkt und am zweiten Punkt liegen und die Schenkel sich entlang der Führungskurve, also zwischen dem ersten Punkt und dem zweiten Punkt erstrecken. Alternativ oder zusätzlich kann die Passfeder bogenförmig ausgebildet sein. Ferner alternativ oder zusätzlich kann die Passfeder mit einer korrespondierenden, am Einstellteil angeordneten Nut in Eingriff sein, wobei optional die Nut in Bezug auf das Einstellteil nach außen gewölbte Seitenflächen, also bezogen auf das Einstellteil konvexe Seitenflächen, umfassen kann.

Gemäß einer Ausführungsform können die Einstellteile an einem Grundkorpus in radialer Richtung verschiebbar gelagert sein, beispielsweise um eine durch die radiale Richtung definierte Achse verdrehfest verschiebbar gelagert sein.

Alternativ oder zusätzlich kann das Steuersegment in Umfangsrichtung verschiebbar am Grundkorpus gelagert sein.

Gemäß einer Ausführungsform können die Einstellteile teleskopartig ausgebildet sein. Als mögliche Ausführung können die Einstellteile je ein radial äußeres Einstellteilstück und ein radial inneres Einstellteilstück umfassen, wobei die Einstellteilstücke in radialer Richtung relativ zueinander verschiebbar sind, wobei beispielsweise am radial inneren Einstellteilstück das Führungsleistensegment angeordnet ist. Die Einstellteile können derart ausgebildet sein, dass durch ein Verschieben des Steuersegments in Umfangsrichtung das radial innere Einstellteilstück eine Verschiebung in radialer Richtung erfährt. Die Einstellteilstücke können optional bezogen auf eine durch die radiale Richtung definierte Achse relativ zueinander drehfest ausgebildet sein. Die Einstellstücke können also gegen ein Verdrehen relativ zueinander um die radiale Richtung beziehungsweise die durch diese definierte Achse gesichert sein.

Gemäß einer Ausführungsform kann die Vorrichtung einen Koppelmechanismus zum Koppeln mit einer in Umfangsrichtung benachbart angeordneten weiteren Vorrichtung zum Führen von durch ein Sternrad in einem Sternradförderer geförderten Behältern umfassen. Der Koppelmechanismus kann ausgebildet sein zum Koppeln des Steuersegments der Vorrichtung mit dem weiteren Steuersegment der weiteren Vorrichtung, so dass die gekoppelten Steuersegmente gemeinsam in Umgangsrichtung verschiebbar sind.

Der Koppelmechanismus kann ein Koppelgestänge umfassen, wobei der Koppelmechanismus beispielsweise eine mit dem Steuersegment gekoppelte erste Stange mit einem Gewinde ersten Drehsinns umfasst, das über eine Verbindungsmutter mit einer zweiten Stange mit Gewinde zweiten Drehsinns, der entgegengesetzt zum ersten Drehsinn orientiert ist, gekoppelt ist, wobei die zweite Stange ausbildet ist, an das weitere Steuersegment der weiteren Vorrichtung gekoppelt zu werden. So können auf einfache Weise zwei Vorrichtungen in Umfangsrichtung hintereinander angeordnet werden, um eine durch die kombinierten Vorrichtungen bereitgestellte Gesamtführungsbahnlänge für die Behälter entsprechend zu vergrößern, wobei durch das Koppeln der Steuersegmente via den Koppelmechanismus lediglich eine Betätigungseinheit zum Steuern der Position lediglich eines der Steuersegmente vorgesehen werden muss, um alle Steuersegmente simultan zu bewegen.

Gemäß einer Ausführungsform kann die Vorrichtung eine Betätigungseinheit zum Einstellen der Position des Steuersegments relativ zu den Einstellteilen umfassen, wobei beispielsweise die Betätigungseinheit und das Steuersegment über eine Verzahnung in Eingriff stehen können. Die Betätigungseinheit kann optional einen manuell bedienbaren Antrieb und/oder einen automatischen Antrieb, beispielsweise einen Elektromotor, umfassen.

Gemäß einer Ausführungsform kann die Vorrichtung eine Höhenverstellvorrichtung zum Verstellen einer Höhenposition der Vorrichtung umfassen. Die Betätigungseinheit kann beispielsweise ein relativ zu einem Antriebsritzel der Betätigungseinheit entlang der in Höhenrichtung orientierten Rotationsachse des Antriebsritzels verschiebbares, drehfest mit dem Antriebsritzel verbundenes Wellenelement umfassen.

Die oben gestellte Aufgabe wird weiterhin durch einen Sternradförderer zum Fördern von Behälter, bevorzugt zum Fördern von Getränkebehältern in einer Getränkeabfüllanlage, mit den Merkmalen des Anspruchs 14 gelöst. Vorteilhafte Weiterbildungen ergeben sich aus dem Unteranspruch sowie der vorliegenden Beschreibung und den Figuren.

Entsprechend wird ein Sternradförderer zum Fördern von Behälter, beispielsweise zum Fördern von Getränkebehältern in einer Getränkeabfüllanlage, vorgeschlagen, umfassend ein um eine Drehachse drehbares Förderradteil mit einer Mehrzahl von in Bezug auf die zentrale Achse nach außen gerichteten Taschen zum zumindest teilweisen Aufnehmen eines zu fördernden Behälters, und zumindest eine Vorrichtung gemäß einer der vorstehenden Ausführungsformen.

Die zentrale Achse stellt eine Drehachse des Förderradteils dar beziehungsweise fällt mit dieser zusammen.

Die hinsichtlich der Vorrichtung in diesem Dokument beschriebenen Vorteile und Wirkungen treffen in analoger Weise auch auf den Sternradförderer zu, und umgekehrt. Auf eine wiederholte Beschreibung derselben wird daher verzichtet, um Redundanzen zu vermeiden.

Gemäß einer Ausführungsform kann eine Mehrzahl von Vorrichtungen bezogen auf die Drehachse in Umfangsrichtung nebeneinander angeordnet sein. Die Steuersegmente benachbarter Vorrichtungen können optional miteinander gekoppelt sein. Alternativ oder zusätzlich können die jeweils in Umfangsrichtung gesehen äußeren Führungsleistensegmente benachbarter Vorrichtungen miteinander gekoppelt sein.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht auf einen Sternradförderer zum Fördern von Behältern in einer Getränkeabfüllanlage;
- Figur 2: schematisch eine perspektivische Seitenansicht eines Teilbereichs des Sternradförderers aus Figur 1;
- Figur 3: schematisch eine perspektivische Seitenansicht einer Vorrichtung zum Führen von durch den Sternradförderer aus Figur 1 geförderten Behältern;
- Figur 4: schematisch eine Draufsicht auf einen Koppelmechanismus zum Koppeln zweier in Umfangsrichtung benachbart angeordneter Vorrichtungen des Sternradförderers aus Figur 1;
- Figur 5: schematisch eine perspektivische Schnittansicht durch die Vorrichtung aus Figur 3;
- Figur 6: schematisch eine Ansicht auf ein Einstellstück der Vorrichtung aus Figur 5; und
- Figur 7: schematisch eine perspektivische Seitenansicht auf die radial innere Seite eines Teilbereichs der Vorrichtung 1 aus Figur 3.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

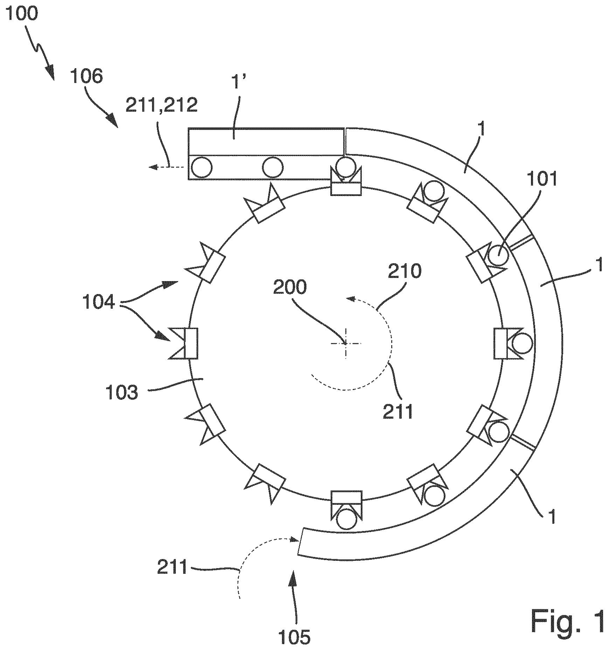

Aus Figur 1 ist schematisch eine Draufsicht auf einen Sternradförderer 100 zum Fördern von Behältern 101 in einer Getränkeabfüllanlage (nicht gezeigt) zu entnehmen. Der Sternradförderer 100 umfasst ein um eine zentrale Achse 200 drehbares Förderradteil 103 mit einer Mehrzahl von an dessen Umgang angeordneten, in Bezug auf die zentrale Achse 200 nach radial außen gerichteten Taschen 104 zum zumindest teilweisen Aufnehmen eines der zu fördernden Behälters 101.

In Bezug auf die zentrale Achse 200 radial außerhalb des Förderradteils 103 ist eine Mehrzahl von Vorrichtungen 1, 1' zum Führen von den durch das ein Sternrad darstellendes Förderradteil 103 in dem Sternradförderer 100 geförderten Behältern 101 über einen vorgegebenen Winkelabschnitt in Bezug auf die zentrale Achse 200 angeordnet.

Die Mehrzahl von Vorrichtungen 1, 1' sind je zum Führen der Behälter 101 an einer radial äußeren Seite bezogen auf das Sternradteil 103 ausgebildet und stellen jeweils und gemeinsam eine Behälteraußenführung 110 zum Führen der Behälter 101 an einer radial äußeren Seite bezogen auf das Sternradteil 103 dar. Mit anderen Worten stellen die Vorrichtungen 1, 1' eine Außenführung für die Behälter 101 dar.

Die Mehrzahl von Vorrichtungen 1, 1' sind bezogen auf die zentrale Achse 200 in Förderrichtung 211 der Behälter 101 nebeneinander beziehungsweise nachfolgend zueinander angeordnet und je über einen Koppelmechanismus 2 miteinander gekoppelt, welcher weiter unten eingehender erläutert wird.

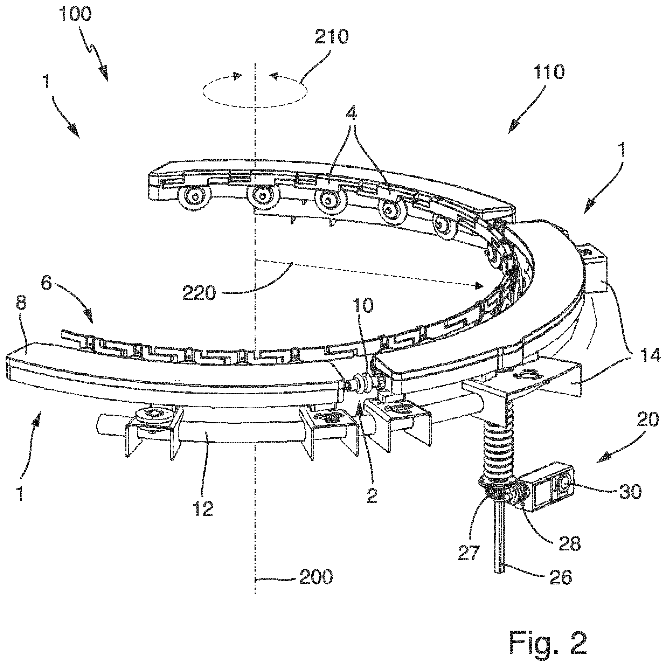

Die Vorrichtungen 1 sind im Wesentlichen identisch aufgebaut. Jede der Vorrichtungen 1 umfasst eine Mehrzahl von in Umfangsrichtung 210 aufgereihten, also nebeneinander beziehungsweise nachfolgend zueinander angeordneten Führungsleistensegmenten 4 (siehe Figur 2). Ferner umfasst der Sternradförderer 100 eine Vorrichtung 1', die in ihrem Aufbau im Wesentlichen den Vorrichtungen 1 entspricht, wobei deren Führungsleistensegmente nicht in Umfangsrichtung 210, sondern in einer zur zentralen Achse 200 tangentialen Richtung 212 angeordnet sind.

In Förderrichtung 211 beziehungsweise in Umfangsrichtung 210 gesehen benachbarte Führungsleistensegmente 4 überlappen sich jeweils teilweise, wie weiter unten noch näher erläutert wird. Die äußeren Führungsleistensegmente 4 benachbarter Vorrichtungen 1, 1' sind ebenfalls miteinander gekoppelt.

Die Führungsleistensegmente 4 bilden eine segmentierte Führungsleiste 6 zum Bereitstellen einer Führungsbahn für zu fördernde Behälter 101 aus, entlang welcher die Behälter 101 in Förderrichtung 211 gefördert werden.

An einer Behälterzufuhr 105 werden dem Sternradförderer 100 zu fördernde Behälter 101 zugeführt. An eine Behälterübergabe 106 werden durch den Sternradförderer 100 beförderte Behälter 101 an eine hier nicht gezeigte, dem Sternradförderer 100 in Förderrichtung 211 nachfolgende Einrichtung der Getränkeabfüllanlage übergeben.

Da die Führungsleistensegmente 4 der Vorrichtungen 1 in Umfangsrichtung 210 angeordnet sind, sind deren segmentierte Führungsleisten 6 jeweils bogenförmig ausgebildet. Die segmentierte Führungsleiste 6 der Vorrichtung 1' weist eine lineare Form auf. Die zusammengesetzte segmentierte Führungsleiste 6, zusammengesetzt aus den Führungsleisten 6 aller Vorrichtungen 1, 1' ist mithin teilweise kreisbogenförmig und teilweise linear.

Figur 2 zeigt schematisch eine perspektivische Seitenansicht der Vorrichtungen 1 des Sternradförderers 100 aus Figur 1.

Die Führungsleistensegmente 4 sind senkrecht zur bereitgestellten Führungsbahn beweglich, so dass ihre Position bezogen auf die zentrale Achse 200 verändert werden kann. Die Führungsleistensegmente 4 der Vorrichtungen 1 sind jeweils in radialer Richtung 220 bezogen auf die zentrale Achse 200 in ihrer Position veränderbar.

Jede Vorrichtung 1 umfasst ein Gehäuse 8, in welchem ein Großteil der zur Bewegung der Führungsleistensegmente 4 erforderlichen Komponenten eingehaust sind. Der Koppelmechanismus 2 zum Koppeln zweier benachbarter Vorrichtungen 1, 1 ` erstreckt sich je zwischen zwei benachbarten Vorrichtungen 1, 1'. Zur Abdichtung gegen die Umgebung umfasst er eine Dichtung, vorliegend ausgebildet als ein an beiden miteinander gekoppelten Vorrichtungen 1, 1' befestigter Faltenbalg 10.

Die Gehäuse 8 sind an einem Rahmen 12 angeordnet, welcher an vorgegebenen Anbindungsbereichen 14 an eine hier nicht gezeigte Höhenverstellvorrichtung angebunden ist. Durch die Höhenverstellvorrichtung kann ein Höhenniveau der segmentierten Führungsleiste 6 in einer Richtung parallel zur zentralen Achse 200 verändert werden. Hierbei entspricht ein höheres Höhenniveau gegenüber einem Ausgangsniveau einer Verschiebung aus dem Ausgangsniveau entgegen der Gravitationsrichtung.

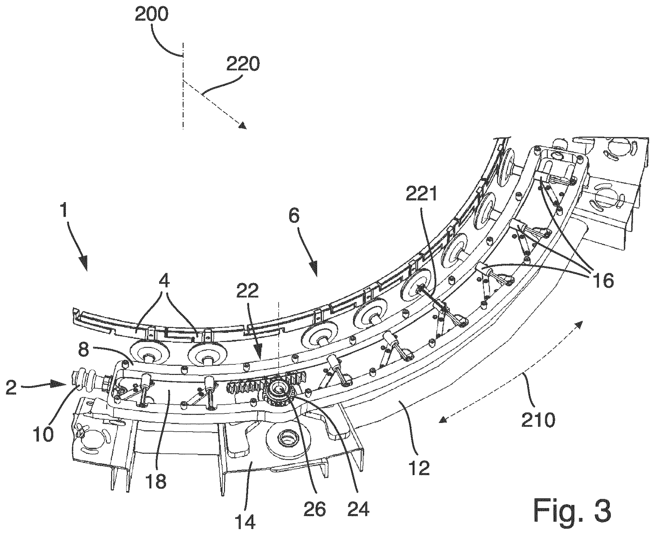

Figur 3 zeigt eine Vorrichtung 1 des Sternradförderers der Figuren 1 und 2 mit ausgeblendeter Gehäuseoberseite.

Die Vorrichtung 1 umfasst eine Mehrzahl von bezogen auf die zentrale Achse 200 in Umfangsrichtung 210 beabstandet voneinander angeordneten, bezogen auf die zentrale Achse 200 jeweils in radialer Richtung verschiebbaren Einstellteilen 16, und ein in Umfangsrichtung 210 verschiebbares Steuersegment 18, welches derart mit den Einstellteilen 16 gekoppelt ist, dass ein Verschieben des Steuersegments 18 in Umfangsrichtung 210 ein Verschieben der Einstellteile 16 in radialer Richtung 220 bewirkt.

Die Verschieberichtung eines der Einstellteile 16 ist durch den Bewegungspfeil mit dem Bezugszeichen 221 angedeutet.

Am radial inneren Ende der Einstellteile 16 ist je ein Führungsleistensegment 4 angeordnet.

Durch Verschieben der Einstellteile 16 kann die segmentierte Führungsleiste 6 bezogen auf die zentrale Achse 200 zwischen einer vorgegebenen radial inneren Position und einer vorgegebenen radial äußeren Position bewegt werden.

Gemäß dieser optionalen Ausführungsform liegt in der radial inneren Position die segmentierte Führungsleiste 6 im Wesentlichen auf einem inneren Radius in Bezug auf die zentrale Achse 200. In der radial äußeren Position liegt die segmentierte Führungsleiste 6 im Wesentlichen auf einem äußeren Radius, der größer ist als der innere Radius. Figur 3 zeigt die segmentierte Führungsleiste 6 auf der radial inneren Position.

Vorliegend sind die Führungsleistensegmente 4 an ihrem zugehörigen Einstellteil 16 drehfest und verschiebefest angeordnet. Sie können beispielsweise verschraubt, verklebt und/oder verschweißt sein.

Wie aus Figur 2 zu entnehmen, umfasst zumindest eine Vorrichtung 1 eine Betätigungseinheit 20 zum Einstellen der Position des Steuersegments 18 relativ zu den Einstellteilen 16. Die Betätigungseinheit 20 und das Steuersegment 18 stehen über eine Verzahnung 22 (siehe Figur 3) in Eingriff. Ein Zahnrad 24 der Verzahnung 22 kann über ein Wellenelement 26 angetrieben werden.

Wie wiederum aus Figur 2 zu entnehmen, ist das Wellenelement 26 mit einem Antriebsritzel 27 drehfest gekoppelt, welches wiederum mit einer Antriebsschnecke 28 eines automatischen Antrieb 30 der Betätigungseinheit 20, hier optional ausgebildet als Elektromotor, kämmt.

Der Antrieb 30 ist an einer festen Höhenposition vorgesehen. Um verschiedene Höhenniveaus der segmentierten Führungsleiste 6 zu ermöglichen, ist das Wellenelement 26 relativ zum Antriebsritzel 27 in Längsrichtung des Wellenelements 26 verschiebbar.

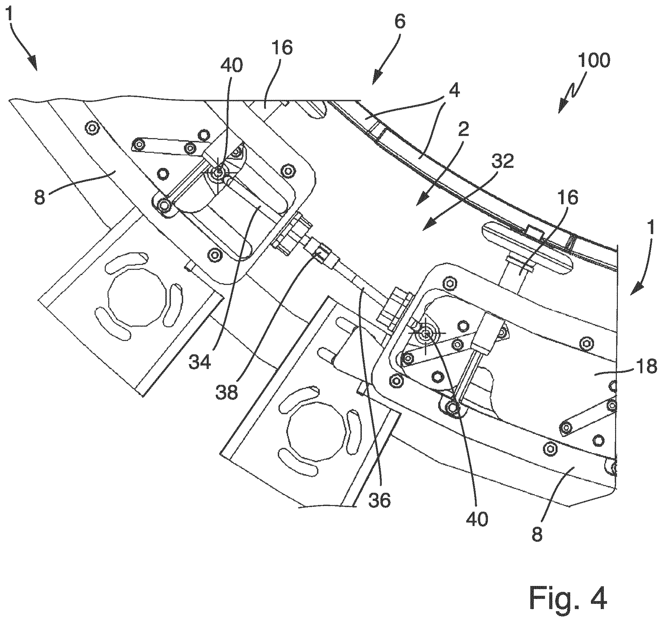

In Figur 4 ist schematisch eine Draufsicht in Richtung der zentralen Achse 200 auf einen der Koppelmechanismen 2 zum Koppeln zweier in Umfangsrichtung 210 benachbart angeordneter Vorrichtungen 1 gezeigt, wobei der Faltenbalg 10 ausgeblendet ist.

Der Koppelmechanismus 2 ist ausgebildet ist zum Koppeln des Steuersegments 18 einer Vorrichtung 1 mit dem weiteren Steuersegment 18 einer weiteren Vorrichtung 1, so dass die gekoppelten Steuersegmente 18 gemeinsam in Umgangsrichtung 210 verschiebbar sind.

Gemäß dieser optionalen Ausführungsform umfasst der Koppelmechanismus 2 ein Koppelgestänge 32, dass eine mit dem einen Steuersegment 18 gekoppelte erste Stange 34 mit einem Gewinde ersten Drehsinns und eine mit dem anderen Steuersegment 18 gekoppelte zweiten Stange 36 mit einem Gewinde zweiten Drehsinns, der entgegengesetzt zum ersten Drehsinn orientiert ist, umfasst. Die beiden Stangen 34, 36 weisen mit ihren die Gewinde umfassenden Enden aufeinander zu und sind via einer Verbindungsmutter 38 miteinander gekoppelt.

Die Stangen 34, 36 sind an ihrem jeweiligen Steuersegment 18 jeweils um eine parallel zur zentralen Achse 200 orientierte Achse 40 drehbar gelagert.

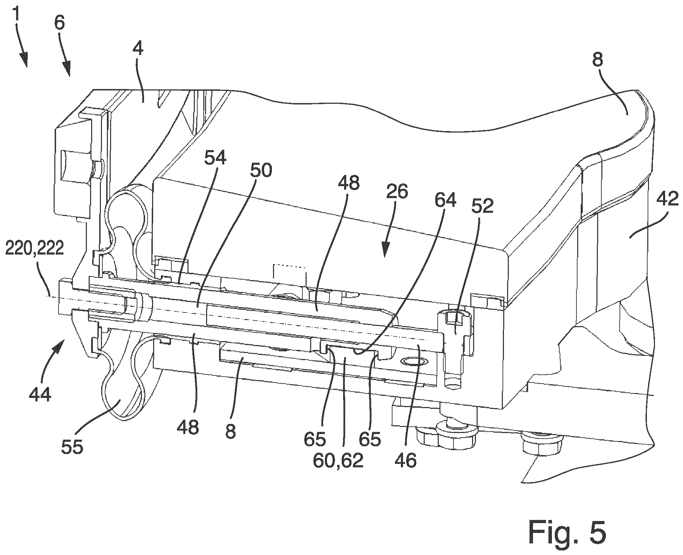

Figur 5 zeigt schematisch eine perspektivische Schnittansicht durch die Vorrichtung 1 aus Figur 3 senkrecht zur Umfangsrichtung 210 auf Höhe eines Einstellteils 16.

Die Einstellteile 16, genauer deren Befestigungsbereiche 44, an welchem das zugehörige Führungsleistensegment 4 befestigt ist, sind an einem Grundkorpus 42, welcher hier eine Gehäuseunterseite darstellt, in radialer Richtung 220 verschiebbar gelagert.

Zur Abdichtung gegenüber der Umgebung ist ein Faltenbalg 55 zwischen dem Grundkorpus 42 und dem Befestigungsbereich 44 angeordnet.

Das Steuersegment 18 ist in Umfangsrichtung 210 verschiebbar am Grundkorpus 42 gelagert.

Gemäß dieser optionalen Ausführungsform sind die Einstellteile 16 teleskopartig ausgebildet. Die Einstellteile 16 umfassen je ein radial äußeres Einstellteilstück 46 und ein radial inneres Einstellteilstück 48, welche in radialer Richtung 220 relativ zueinander verschiebbar sind. Am radial inneren Einstellteilstück 48 ist das zugehörige Führungsleistensegment 4 angeordnet. Die Einstellteilstücke 46, 48 sind relativ zueinander bezogen auf eine durch die radiale Richtung 220 definierte Achse 222 drehfest ausgebildet.

Um die Drehfestigkeit bereitzustellen, weist das radial äußere Einstellteilstück 46 ein polygonartiges Querschnittsprofil aus. Gemäß diesem Beispiel ist das radial äußere Einstellteilstück 46 46 ein Vierkantprofilbalken. Das radial äußere Einstellteilstück 46 ist in einer korrespondierend geformten Aufnahme 50 im radial inneren Einstellteilstück 48 in radialer Richtung 220 geführt.

Das radial äußere Einstellteilstück 46 ist an einer radial äußeren Seite 52 des Einstellteils 16 fest mit dem Grundkorpus 42 verbunden. An der radial inneren Seite 54 des Einstellteils 16 ist das radial innere Einstellteilstück 48 in radialer Richtung 220 verschiebbar gegenüber dem Grundkorpus 42 geführt.

Das Steuersegment 18 ist vorliegend mit dem radial inneren Einstellteilstück 48 derart gekoppelt, dass durch ein Verschieben des Steuersegments 18 in Umfangsrichtung 210 das radial innere Einstellteilstück 48 eine Verschiebung in radialer Richtung 20 erfährt.

Die Einstellteile 16 gemäß dieser Ausführungsform und deren radial innere Einstellteilstücke 48 sind je an einem am Steuersegment 18 angeordneten Führungselement 60 geführt. Hier ist das Führungselement 60 optional als Passfeder 62 ausgebildet, die mit einer am radial inneren Einstellstück 48 vorgesehenen Nut 64 in Eingriff steht. Die Nut 64 umfasst in Bezug auf das Einstellteil 16 nach außen gewölbte Seitenflächen 65.

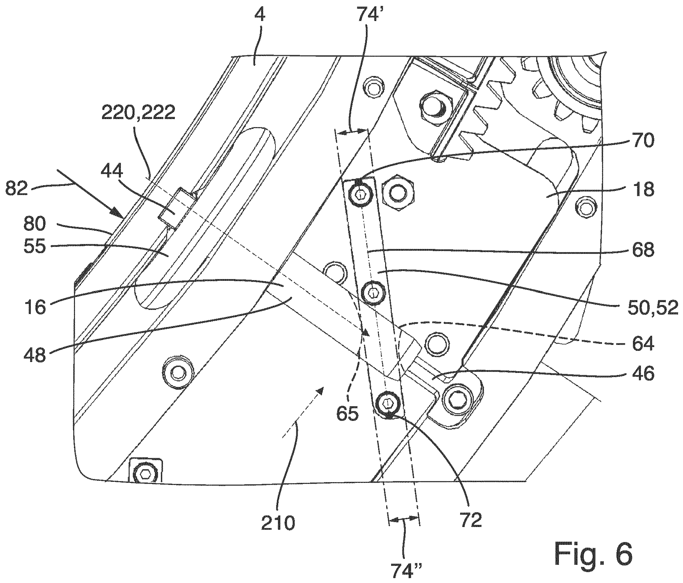

Figur 6 zeigt schematisch eine Ansicht auf ein Einstellstück 16 der Vorrichtung 1 aus Figur 5 in einer Richtung parallel zur zentralen Achse 200.

Das als Passfeder 62 ausgebildete Führungselement 60 stellt eine Führungskurve 68 bereit zwischen einem bezogen auf die zentrale Achse 200 auf einem ersten Radius gelegenen ersten Punkt 72 und einem auf einem zweiten Radius kleiner dem ersten Radius gelegenen, vom ersten Punkt 72 in Umfangsrichtung 210 versetzt angeordneten zweiten Punkt 70.

Die Passfeder 62 weist eine senkrecht zur Führungskurve 68 vorliegende Breite 74 auf, die vom ersten Punkt 72 zum zweiten Punkt 70 zunimmt. Entsprechend ist die Breite 74` am radial äußeren, ersten Punkt 72 um einen vorgegebenen Betrag kleiner als die Breite 74" der Passfeder 62 am radial inneren, zweiten Punkt 70. Hier ist die Passfeder 62 optional trapezförmig ausgebildet. Sie kann aber auch bogenförmig ausgebildet sein.

Die sich entlang der Führungskurve 68 ändernde Breite 74 und die nach außen gewölbten Seitenflächen 65 der Nut sind bereitgestellt, um sicherzustellen, dass die Nut 64 und die Passfeder 62 in jeder Position des Steuersegments 18 relativ zum Einstellteil 16 im Wesentlichen spielfrei oder ein vorgegebenes maximales Spiel nicht überschreitend miteinander gekoppelt sind. Dies ist bedingt durch den sich ändernden Winkel, den die Achse 222 und die Führungskurve 68 einschließen, wenn das Steuersegment 18 relativ zum Einstellteil 16 verschoben wird.

Die Führungsleistensegmente 4 weisen je an ihrer radial inneren Seite 80 eine vorgegebene Krümmung auf, wobei hier optional ein Krümmungsradius 82 der radial inneren Seite 80 dem der radial äußeren Position entsprechenden zweiten Radius entspricht.

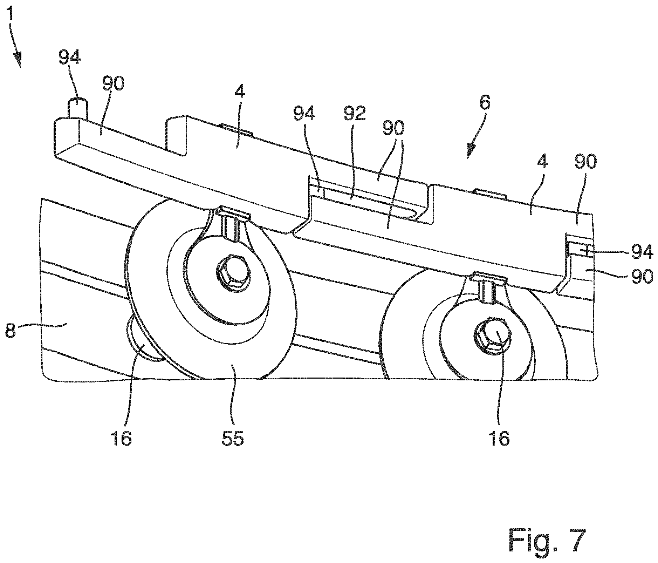

Figur 7 zeigt schematisch eine perspektivische Seitenansicht auf die radial innere Seite eines Teilbereichs der Vorrichtung 1 aus Figur 3, mittels welcher die Kopplung der Führungsleistensegmente 4 untereinander veranschaulicht ist.

Wie bereits aus den Figuren 2 und 3 zu erkennen, überlappen sich benachbarte Führungsleistensegmente 4 in Umfangsrichtung 210. Hierzu weist jedes Führungsleistensegment 4 in Umfangsrichtung 210 an beiden Seiten je einen Überlappungsabschnitt 90 auf, der mit dem korrespondierend ausgebildeten Überlappungsabschnitt 90 des benachbarten Führungsleistensegments 4 in Umfangsrichtung 210 zumindest teilweise überlappt.

In Umfangsrichtung 210 benachbarte Führungsleistensegmente 4 sind in den Überlappungsabschnitten 90 in Umfangsrichtung 210 verschiebbar zueinander gekoppelt. Hierzu steht ein an einem der gekoppelten Führungsleistensegmente 4 angeordnetes Federelement, hier ausgebildet als Führungsstift 94, mit einem am anderen der gekoppelten Führungsleistensegmente 4 angeordneten, sich in Umfangsrichtung 210 erstreckenden Nutelement, hier in Form einer Langlochnut 92, in Eingriff.

Die Führungsleistensegmente 4 sind relativ dadurch zueinander in Umfangsrichtung 210 verschiebbar, wobei bei einem Verschieben der Einstellteile 16 in radialer Richtung 220 die Führungsleistensegmente 4 relativ zueinander eine Verschiebung in einer Richtung parallel zur Umfangsrichtung 210 erfahren.

Durch die Kopplung der Führungsleistensegmente 4 an ihren beiden Enden in Umfangsrichtung 210 gesehen mit jeweils benachbarten Führungsleistensegmenten 4 kann erzielt werden, dass die Enden nicht nach radial innen bezogen auf die zentrale Achse 200 vorstehen. Die segmentierte Führungsleiste 6 kann dadurch eine Führung der Behälter 101 entlang der Förderrichtung 211 bereitstellen, im Wesentlichen, ohne, dass die Behälter 101 Stöße an den Übergängen von einem Führungsleistensegment 4 zum nächsten Führungsleistensegment 4 erfahren.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Koppelmechanismus
- 4: Führungsleistensegment
- 6: Segmentierte Führungsleiste
- 8: Gehäuse
- 12: Rahmen
- 14: Anbindungsbereich
- 16: Einstellteil
- 18: Steuersegment
- 20: Betätigungseinheit
- 22: Verzahnung
- 24: Zahnrad
- 26: Wellenelement
- 27: Antriebsritzel
- 28: Antriebsschnecke
- 30: Antrieb
- 32: Koppelgestänge
- 34: Erste Stange
- 36: Zweite Stange
- 38: Verbindungsmutter
- 40: Achse
- 42: Grundkorpus
- 44: Befestigungsbereich
- 46: Radial äußeres Einstellteilstück
- 48: Radial inneres Einstellteilstück
- 50: Aufnahme
- 52: Radial äußere Seite
- 54: Radial innere Seite
- 55: Faltenbalg
- 60: Führungselement
- 62: Passfeder
- 64: Nut
- 68: Führungskurve
- 70: Zweiter Punkt
- 72: Erster Punkt
- 74: Breite der Passfeder
- 80: Radial innere Seite
- 82: Krümmungsradius
- 90: Überlappungsabschnitt
- 92: Langlochnut
- 94: Führungsstift

- 100: Sternradförderer
- 101: Behälter
- 103: Förderradteil
- 104: Tasche
- 105: Behälterzufuhr
- 106: Behälterübergabe
- 110: Behälteraußenführung

- 200: Zentrale Achse
- 210: Umfangsrichtung
- 211: Förderrichtung
- 212: Tangentiale Richtung
- 220: Radiale Richtung
- 221: Verschieberichtung des Einstellteils
- 222: Durch die radiale Richtung definierte Achse

## Patentansprüche

1. Vorrichtung (1) zur Führung von durch ein Sternrad (103) in einem Sternradförderer (100) geförderten Behältern (101), bevorzugt zum Führen von Getränkebehältern (101) in einem Sternradförderer (100) in einer Getränkeabfüllanlage, umfassend mindestens zwei von bezogen auf eine zentrale Achse (200) in einer Umfangsrichtung (210) beabstandet voneinander angeordneten, bezogen auf die zentrale Achse (200) jeweils in radialer Richtung (220) verschiebbaren Einstellteilen (16), und ein in Umfangsrichtung (210) verschiebbares Steuersegment (18), welches derart mit den Einstellteilen (16) gekoppelt ist, dass ein Verschieben des Steuersegments (18) in Umfangsrichtung (210) ein Verschieben der Einstellteile (16) in radialer Richtung (220) bewirkt,
**dadurch gekennzeichnet, dass**
am radial inneren Ende der Einstellteile (16) je ein Führungsleistensegment (4) angeordnet ist, wobei die Führungsleistensegmente (4) gemeinsam eine segmentierte Führungsleiste (6) zum Bereitstellen einer Außenführungsbahn für die zu fördernden Behälter (101) ausbilden.

2. Vorrichtung (1) gemäß Anspruch 1, **dadurch gekennzeichnet, dass** sich benachbarte Führungsleistensegmente (4) in Umfangsrichtung jeweils überlappen.

3. Vorrichtung (1) gemäß Anspruch 1 oder 2, **dadurch gekennzeichnet, dass** durch Verschieben der Einstellteile (16) die segmentierte Führungsleiste (6) bezogen auf die zentrale Achse (200) zwischen einer vorgegebenen radial inneren Position und einer vorgegebenen radial äußeren Position bewegbar ist, wobei bevorzugt in der radial inneren Position die segmentierte Führungsleiste (6) im Wesentlichen auf einem inneren Radius in Bezug auf die zentrale Drehachse (200) angeordnet ist und in der radial äußeren Position die segmentierte Führungsleiste (6) im Wesentlichen auf einem äußeren Radius, der größer ist als der innere Radius, angeordnet ist.

4. Vorrichtung (1) gemäß einem der vorstehenden Ansprüche, **dadurch gekennzeichnet, dass** die die Führungsleistensegmente (4) an ihrem zugehörigen Einstellteil (16) zumindest um eine durch die radiale Richtung (220) definierte Achse (222) drehfest angeordnet sind und/oder zumindest in Umfangsrichtung (210) verschiebefest angeordnet ist.

5. Vorrichtung (1) gemäß einem der vorstehenden Ansprüche, **dadurch gekennzeichnet, dass** die Führungsleistensegmente (4) relativ zueinander verschiebbar sind, bevorzugt in Umfangsrichtung (210), wobei bevorzugt bei einem Verschieben der Einstellteile (16) in radialer Richtung (220) die Führungsleistensegmente (4) relativ zueinander eine Verschiebung in einer Richtung parallel zur Umfangsrichtung (210) erfahren.

6. Vorrichtung (1) gemäß einem der vorstehenden Ansprüche, **dadurch gekennzeichnet, dass** zumindest zwei in Umfangsrichtung (210) benachbarte Führungsleistensegmente (4) miteinander gekoppelt sind, bevorzugt verschiebbar gekoppelt sind, besonders bevorzugt in Umfangsrichtung (210) verschiebbar gekoppelt sind, wobei bevorzugt ein an einem der gekoppelten Führungsleistensegmente (4) angeordnetes Federelement, bevorzugt ein Führungsstift (94), mit einem am anderen der gekoppelten Führungsleistensegmente (4) angeordneten, sich bevorzugt in einer Verschieberichtung, bevorzugt der Umfangsrichtung (210), erstreckenden, Nutelement, bevorzugt einer Langlochnut (92), in Eingriff steht.

7. Vorrichtung (1) gemäß einem der vorstehenden Ansprüche, **dadurch gekennzeichnet, dass** die Führungsleistensegmente (4) an ihrer radial inneren Seite (80) eine vorgegebene Krümmung aufweisen, wobei bevorzugt ein Krümmungsradius (82) der radial inneren Seite (80) dem zweiten Radius der radial äußeren Position oder dem ersten Radius der radial inneren Position, oder dem Radius einer Position zwischen der radial inneren Position und der radial äußeren Position, bevorzugt einer zwischen der radial inneren Position und der radial äußeren Position mittigen radialen Mittelposition, entspricht.

8. Vorrichtung (1) gemäß einem der vorstehenden Ansprüche, **dadurch gekennzeichnet, dass** die Einstellteile (16) je an einem am Steuersegment (18) angeordneten Führungselement (60) geführt sind, wobei bevorzugt das Führungselement (60) eine Führungskurve (68) bereitstellt zwischen einem bezogen auf die zentrale Achse (200) auf einem ersten Radius gelegenen ersten Punkt (72) und einem auf einem zweiten Radius kleiner dem ersten Radius gelegenen, vom ersten Punkt (72) in Umfangsrichtung (210) versetzt angeordneten zweiten Punkt (70), wobei bevorzugt das Führungselement (60) eine Passfeder (62) oder eine Führungsnut umfasst, wobei die Passfeder (62) bevorzugt eine senkrecht zur Führungskurve vorliegende Breite (74) umfasst, die vom ersten Punkt (72) zum zweiten Punkt (70) zunimmt, wobei die Passfeder (60) bevorzugt trapezförmig ausgebildet ist, und/oder die Passfeder (62) bogenförmig ausgebildet ist, und/oder die Passfeder (62) mit einer korrespondierenden, am Einstellteil (16) angeordneten Nut (64) in Eingriff steht, wobei bevorzugt die Nut (64) in Bezug auf das Einstellteil (16) nach außen gewölbte Seitenflächen (65) umfasst.

9. Vorrichtung (1) gemäß einem der vorstehenden Ansprüche, **dadurch gekennzeichnet, dass** die Einstellteile (16) an einem Grundkorpus (42) in radialer Richtung (220) verschiebbar gelagert sind, bevorzugt um eine durch die radiale Richtung (220) definierte Achse (222) verdrehfest und verschiebbar gelagert sind, und/oder, dass das Steuersegment (18) in Umfangsrichtung (210) verschiebbar am Grundkorpus (42) gelagert ist.

10. Vorrichtung (1) gemäß einem der vorstehenden Ansprüche, **dadurch gekennzeichnet, dass** die Einstellteile (16) teleskopartig ausgebildet sind, wobei bevorzugt die Einstellteile (16) je ein radial äußeres Einstellteilstück (46) und ein radial inneres Einstellteilstück (48) umfassen, wobei die Einstellteilstücke (46, 48) in radialer Richtung (220) relativ zueinander verschiebbar sind, wobei bevorzugt am radial inneren Einstellteilstück (48) das Führungsleistensegment (4) angeordnet ist, wobei durch ein Verschieben des Steuersegments (18) in Umfangsrichtung (210) das radial innere Einstellteilstück (48) eine Verschiebung in radialer Richtung (220) erfährt, und/oder bevorzugt die Einstellteilstücke (16) relativ zu einander bezogen auf eine durch die radiale Richtung (220) definierte Achse (222) drehfest ausgebildet sind.

11. Vorrichtung (1) gemäß einem der vorstehenden Ansprüche, **dadurch gekennzeichnet, dass** die Vorrichtung (1) ferner einen Koppelmechanismus (2) zum Koppeln mit einem in Umfangsrichtung (210) benachbart angeordneten weiteren Vorrichtung (1) zum Führen von durch ein Sternrad (103) in einem Sternradförderer (100) geförderten Behältern (101) umfasst, wobei bevorzugt der Koppelmechanismus (2) ausgebildet ist zum Koppeln des Steuersegments (18) mit dem weiteren Steuersegment (18) der weiteren Vorrichtung (1), so dass die gekoppelten Steuersegmente (18) gemeinsam in Umgangsrichtung (210) verschiebbar sind, wobei bevorzugt der Koppelmechanismus (2) ein Koppelgestänge (32) umfasst, wobei der Koppelmechanismus (2) bevorzugt eine mit dem Steuersegment (18) gekoppelte erste Stange (34) mit einem Gewinde ersten Drehsinns umfasst, das über eine Verbindungsmutter (38) mit einer zweiten Stange (36) mit Gewinde zweiten Drehsinns, der entgegengesetzt zum ersten Drehsinn orientiert ist, gekoppelt ist, wobei die zweite Stange (36) ausbildet ist, an das Steuersegment (18) der weiteren Vorrichtung (1) gekoppelt zu werden.

12. Vorrichtung (1) gemäß einem der vorstehenden Ansprüche, **dadurch gekennzeichnet, dass** die Vorrichtung (1) eine Betätigungseinheit (20) zum Einstellen der Position des Steuersegments (18) relativ zu den Einstellteilen (16) umfasst, wobei bevorzugt die Betätigungseinheit (20) und das Steuersegment (18) über eine Verzahnung (22) in Eingriff stehen, wobei die Betätigungseinheit (20) einen manuell bedienbaren Antrieb (30) und/oder einen automatischen Antrieb (30), bevorzugt einen Elektromotor, umfasst.

13. Vorrichtung (1) gemäß einem der vorstehenden Ansprüche, **dadurch gekennzeichnet, dass** die Vorrichtung (1) eine Höhenverstellvorrichtung zum Verstellen einer Höhenposition der Vorrichtung (1) umfasst, wobei bevorzugt die Betätigungseinheit (20) ein relativ zu einem Antriebsritzel (27) der Betätigungseinheit (20) entlang der in Höhenrichtung orientierten Rotationsachse des Antriebsritzels (27) verschiebbares, drehfest mit dem Antriebsritzel (27) verbundenes Wellenelement (26) umfasst.

14. Sternradförderer (100) zum Fördern von Behältern (101), bevorzugt zum Fördern von Getränkebehältern (101) in einer Getränkeabfüllanlage, umfassend ein um eine zentrale Achse (200) drehbares Förderradteil (103) mit einer Mehrzahl von in Bezug auf die zentrale Achse (200) nach außen gerichteten Taschen (104) zum zumindest teilweisen Aufnehmen eines zu fördernden Behälters (101), **gekennzeichnet durch** zumindest eine Vorrichtung (1) gemäß einem der vorstehenden Ansprüche.

15. Sternradförderer (1) gemäß dem vorstehenden Anspruch, **dadurch gekennzeichnet, dass** eine Mehrzahl von Vorrichtungen (1) bezogen auf die zentrale Achse (200) in Umfangsrichtung (210) nebeneinander angeordnet sind, wobei bevorzugt die Steuersegmente (18) benachbarter Vorrichtungen (2) miteinander gekoppelt sind und/oder die jeweils äußeren Führungsleistensegmente (4) benachbarter Vorrichtungen (1) miteinander gekoppelt sind.
